# EUROPEAN PATENT APPLICATION

(11) **EP 1 739 925 A1**
(43) Date of publication of application: **03.01.2007**
(21) Application number: 05105801.4
(22) Date of filing: 29.06.2005
(51) Int. Cl.: H04L 29/08, G06Q 30/00, H04H 1/00

(54) **Process and system for transmitting a key information about a product**

(71) Applicant: Van Genechten, Michel, Auguste, Albert, 1700 Dilbeek (BE)
(72) Inventor: Van Genechten, Michel, Auguste, Albert, 1700 Dilbeek (BE)
(74) Representative: Gevers, François

(57) **Abstract**

Process and system for transmitting a key information about a product to be captured by a human sense by using a coded information allowing to retrieve said key information corresponding to said product. The process comprises the steps of transmitting said coded information corresponding to the key information about said product, receiving said coded information and decoding said coded information for providing an intermediate information identifying the key information. The transmitting is made in a wireless, inaudible way.

## Description

The present invention relates to a process for transmitting a key information about a product to be captured by a human sense by using a coded information allowing to retrieve the key information corresponding to the product comprising:
* transmitting from a transmission unit to a receiving unit, remote from said transmission unit, said coded information corresponding to the key information about said product,
* receiving said coded information by the receiving unit at least upon detection by a human sense of the product, and
* decoding said coded information for providing an intermediate information identifying the key information.

The present invention relates also to a device for carrying out the process according to the invention.

Such a process is known, for example, from the EP patent application n° 1 457 971 which describes an information transmitting process able to transmit a target information via voice. The EP patent application discloses an information transmitting process which comprises a conversion of an input text information into an intermediate code, being a voice signal, in accordance with a predetermined encoding method and an output of a voice derived from voice information, based on the intermediate code, and supplemented with music arrangement information. Then an information decoding apparatus, receiving the voice signal allows suitable IT equipment to extract the information and to acquire the text information from the signal. The voice signal is transmitted on the speech bandwidth. Therefore, the encoded voice can be transmitted into intervals between human speeches or passages of music or can be multiplexed.

For example, URL addresses to get information about baseball players are encoded using a voice and the encoded voice may be broadcast in during the match in the ballpark to let a large number of spectators receive it. Each receiving party in possession of the information decoding apparatus or of a device incorporating it may have the encoded voice received and decoded by the apparatus to obtain the information about the players by the URL addresses. The encoded voice is broadcast over the speech bandwidth and between the comment of the animator.

Unfortunately, such a process is complex to carry out and is not easily adaptable to several situations. For example, there should always be a loudspeaker which should be present to emit the encoded voice which implies a carrier signal, being a voice signal. Therefore, the process according to the EP patent is only adapted for voice, i.e. the product can only be a voice or a sound product. It is not possible to adapt the system to an odour, a picture, a promotion, an object, a material and the like.

Indeed, in this case, there would be no voice signal for carrying the encoded voice signal and the process can not be carried out.

Further, the transmission of an audible voice signal into intervals between human speeches or passages of music is unpleasant to the human ear and is not applicable in quiet environment. Indeed, the disclosed coding method is in summary a correspondence between letters and music notes. As there are more letters in the alphabet than music notes, the coding method intends to attribute to alphabetic letters any two of a pitch, a note length, a tone colour, a tone quality, a melody in addition to classical notes. Therefore the coded audible message to transmit can result in a ugly melody or to a sound which is very unpleasant.

According to the EP patent application, the decoding can be done by an e-device like a mobile phone, a PDA, etc. but the recognising of a voice signal integrated within another voice signal is a heavy step. This can only be done by eating-memory and costly software, which are generally not adaptable on common inexpensive mobile phones and PDA. Moreover, because the encoded voice signal is emitted into intervals between sound passages or is multiplexed, it is required to store all the voice signal comprising a basic voice signal and the encoded voice signal for catching the encoded voice signal to be later decoded which step also requires a large memory to be integrated in the common e-device.

Therefore, it is an object of the invention to palliate at least some of these drawbacks by providing a process allowing to retrieve a key information about all products to be captured by a human sense and not only about voice products which is easy to carry out and which does only involve existing device without requiring complex mobile phone or PDA with a large memory or to store a disproportionally large information in respect with the needed information.

To this end, the invention provides a process according to the preamble of claim 1, characterised in that the coded information is a unique identifier and in that the transmitting of said unique identifier is made in a wireless, inaudible way and at least one time during the detection by a human sense of the product.

By the terms "coded information", it is meant a signal which can be encrypted or not.

Therefore, as the transmission is an inaudible transmission, it is not unpleasant for the human ear and it surely not result in a uncomfortable sound. Further, the process according to the invention doesn't imply a costly equipment. With the transmitting of a unique identifier, which is predetermined, the coded information doesn't need a complex method of coding and decoding and does not involve a large memory because the coded information doesn't contain a large volume of data. The process according to the invention should only need to provide a sufficient number of unique identifiers for allowing each unique identifier to correspond to an intermediate information about a particular product to be captured by a human sense.

For example, the process according to the invention can be as follows. Upon broadcast of a song, a unique identifier is emitted by a transmission unit, for example, a blue-tooth transmission unit. When a driver of a car, hearing this song at the radio, thinks that he or she wants to know more information about the singer, he or she just has to activate the function on its common e-device "receive by common blue-tooth function the coded information". When he or she has time, he just has to go into a menu of his e-device to read in letters what was sent by the blue-tooth transmission unit and for example, he will receive a short reference number to go to the internet to buy the CD of the singer or to go to the website of the singer to receive more information about the song and the singer. Of course, the common e-device can be a device relatively simple_which is not a very sophisticated one and which is not very expensive. It is also intended in the invention that the e-device will directly connect to the internet to get immediately the information needed.

Moreover, the process according to the invention is advantageously adapted to transmit a key information about all products to be captured by a human sense. For example, the product can be a perfume, an odour, a material, a sound, a picture or a movie product, a promotion, an aliment, and the like. More particularly, it is possible according to the invention to provide a key information about a food product being tasted because the person who is eating the aliment likes it. Therefore, to not forget what he or she has tasted, he or she could be interested about knowing a key information about this product, for example the name, the manufacturer, the supplier, etc. In another example, in a carpet shop, a person looking at a material which feels good for him, needs to retrieve a key information about the carpet he or she loves. Therefore, the invention allows this person to receive a key information about this product, for example, the name or the reference of the colour or touched fibre. Other examples can be a perfume in a beauty shop, a sound emitted at the radio, a picture of somebody about who he or she wishes to find the name, and the like.

In a particular embodiment, the intermediate information is the key information, and wherein the retrieving of said key information is the decoding of the unique identifier.

Therefore, it should be more easy to get the key information, since the decoding of the information will directly give the key information about the product about which this key information is asked.

Advantageously, the transmitting of the unique identifier is done continuously in loop.

This is very advantageous in certain exhibition cases, for example in a museum or in shops. Indeed, in the case of a museum, where a quiet environment is required, it should be advantageous to emit the coded information in loop. Therefore, when people, enjoying the exhibited object, wish to receive a key information about an artistic product, they only need to receive the coded information, which is inaudible, for retrieving the key information later. This can be done, for example, by activating the function "record the coded information" on its common e-device. In the case of shops, when products are exhibited, a customer can be interested to receive a key information about a particular exhibited product. Therefore, he will receive the coded information, which is inaudible, for retrieving the key information later, by activating a receiving function on his e-device at any moment since the coded information is continuously emitted.

More particularly, the transmitting is chosen among an ultrasonic transmission, an IR transmission, a blue tooth transmission, in a frequency being outside the audible range. Therefore, the coded information can be received by existing e-devices which largely already have this transmission/receiving means.

Other embodiments of the process according to the invention are mentioned in the annexed claims.

The invention also relates to a system for transmitting a key information about a product to be captured by a human sense by using a coded information allowing to retrieve said key information corresponding to said product for carrying out the process according to the invention comprising :
* at least a transmission unit provided for transmitting the coded information at least during a detection of the product to be captured by the human sense,
* at least a receiving unit to be placed within an existing device and provided to store the coded information transmitted,
* decoding means, provided to read and to translate the coded information in an intermediate information.

The device according to the EP patent n° 1 457 971 comprises at least an information encoding apparatus having converting means, a voice waveform synthesis unit and voice outputting means, being an analog-to-digital conversion circuit or a modem voice. The converting means are provided to convert a text input information into a voice signal to be created by the voice waveform synthesis unit. The voice outputting means are for example loudspeakers for the transmission of the voice signal. Moreover, the device comprises means for multiplexing the encoded voice signal and the basic normal voice signal to be transmitted. In addition, the device of the EP patent application comprises an information decoding apparatus having a voice receiving means for the reception of the complete voice signal, voice recognising means and an IT system for the extraction of the coded signal and for translating it into the information to receive.

The device of the known EP patent application is a very complex device implying a large number of sophisticated elements. For example, the IT system is an essential element of the device and is provided to retrieve the coded voice signal among the complete voice signal comprising a basic voice signal multiplexed with the encoded voice signal, being emitted during intervals between sound passages. Therefore the device is not easily adaptable to all situations by involving, for example, heavy materials and costly elements like loudspeakers, IT systems, voice recognising means etc. Also, the device should require a large memory to store the disproportionally large information in respect with the key information since the complete vocal signal has to be stored. Moreover, the device according to the EP patent application can not be adapted in quiet environment, in environment where it is impossible to transmit a voice signal, etc.

Therefore, it is an object of the invention to palliate at least some of these drawbacks by providing a system allowing to retrieve a key information about all products to be captured by a human sense and not only about voice products which is an easy system implying only existing devices without requiring IT elements or heavy materials. Moreover, the system according to the invention is an inexpensive system.

Indeed, the system according to the invention is characterised in that the coded information is a unique identifier and in that the transmission unit is a wireless transmission unit provided for an inaudible transmission of the unique identifier.

This allows to respect quiet environment and to adapt the system according to the invention in environment in which emission of a voice signal is not possible. Moreover, the system according to the invention doesn't require to comprise a large memory since the coded information is not memory-eating.

In a particular embodiment, the intermediate information is the key information and wherein the retrieving means are the decoding means. As the retrieving means are the decoding means, this provides that the decoded information give directly the key information that people are needed.

Advantageously, the transmission unit is an ultrasonic transmission unit, an IR transmission unit or a blue tooth transmission unit, the transmission unit having a working frequency range outside of the audible frequency range. Therefore, the system according to the invention uses only technical features which are generally present in common e-devices.

Moreover, in a particular embodiment, the transmission unit is placed next to said product to be captured by a human sense. Therefore, when standing next a product to be captured, a person can receive the coded information permanently, without being dependent of an emission of any product. For example, in an exhibition, when arriving in front of the product to be captured by a human sense enjoying the person, the coded information corresponding to the key information can be received at any time.

Advantageously, the system according to the invention further comprises means for activating said receiving unit.

The means for activating said receiving unit can for example be a button of an existing device, like a switch, a key, and the like. Therefore, the user of the device who wants to receive the coded information over a captured product can push on a key of, for example, his mobile phone and the receiving unit will be activated for receiving the coded information.

The user can stop the receiving of the coded information himself for example by pushing the switch or a stop key.

Preferably, the coded information can comprise a stop signal to avoid that the coded information is received more than once in the receiving unit.

Moreover, it also intended that the duration of the receiving can be pre-programmed and the device will stop alone the receiving of the coded information. It is also contemplated according to the invention that the device can receive a series of coded information for a long period of time, for example, for one or two hours if it is desired, for example, during a visit of a museum, during a show or the like.

Other embodiments of the system according to the invention are mentioned in the annexed claims.

Other characteristics and advantages of the invention will appear more clearly in the light of the following description of a particular non-limiting embodiment of the invention, while referring to the figures.
Figure 1 is a schematic illustration of the system according to the invention.
Figure 2 is a schematic illustration of the a preferred embodiment of the system according to the invention
Figure 3 is a schematic illustration of a variant embodiment according to the invention.
Figure 4 is a schematic illustration of another variant embodiment according to the invention.

In the drawings, a same reference sign has been allotted to a same or analogous element of the electric communication unit according to the invention.

The system 1 according to the invention is provided for transmitting a key information about a product to be captured by a human sense. The product can be any product, for example, an audio product, a visual product, an olfactory product, a touchable product or a taste product, or even a combination thereof.

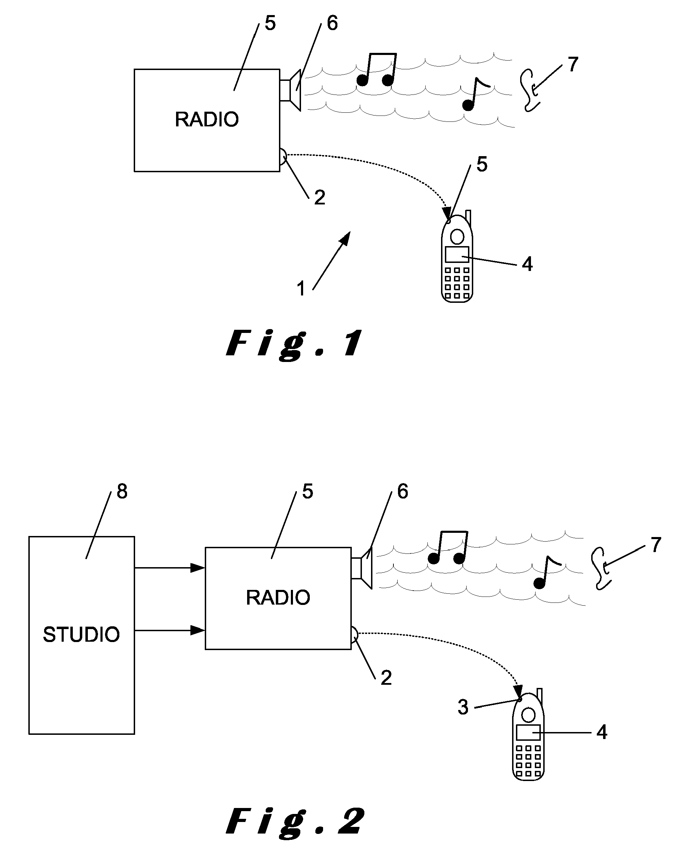

As it can be seen in figure 1, the system 1 according to the invention comprises at least a transmission unit 2, at least a receiving unit 3. The transmission unit 2 is provided for transmitting a coded information allowing to retrieve the key information corresponding to the product at least during a detection of the product by a human sense. The transmission unit 2 is a wireless transmission unit 2 provided for an inaudible transmission of the coded information. The receiving means 3 are provided to be placed on, in and/or integrated within an existing device 4 and provided to store the coded information transmitted. The existing device is for example a portable computer, a mobile phone, a PDA, an organiser, a watch, a memory stick, a MP3 reader or the like. It is provided according to the invention that the receiving means can be a mini chip to be placed upon or within every existing devices or can be a separate function being directly programmed in all those existing devices for receiving the coded information. Advantageously, the existing device can comprise means for activating the receiving means like a key, a button, a switch and the like.

The transmission means 2 can be placed for example on an existing radio 5 or integrated to the new generation of radio 5 and the coded information is emitted by the transmission unit 2 during the broadcasting of a song which is heard via the loudspeaker 6 by a human ear 7.

According to the invention, the transmission unit 2 is an ultrasonic transmission unit, an IR transmission unit or a blue tooth transmission unit and the transmission unit 2 has a working frequency range outside of the audible frequency range.

The system according to the invention further comprise decoding means (not illustrated) provided to read and to translate the coded information in an intermediate information.

The decoding means can be every means suitable to this end which can be integrated in the existing device. The decoding means can be a software or an hardware which is within a decoding device, for example, the decoding device can be directly the existing device, which can be the same or different of the existing devices comprising the receiving means.

For example, the receiving device for receiving the coded information can be a cellular phone and the decoding device can be a computer with which the cellular phone is able to communicate.

In another example, the cellular phone will receive the coded information, then it will record the coded information and will translate it into an intermediate information. In both case, the user can after having the intermediate information, go to a public data base, to a private data base, to the internet, to a library, to several repertories etc. to find the key information.

Preferably, the unique identifier or the coded information are a small data signal, which is not memory-eating.

In a variant, it is provided according to the invention, that the intermediate information is directly the key information, then in the aforementioned case, the mobile phone will directly transcript the coded information into, for example, a textual message or a vocal message, in order to give the key information to the user.

Preferably, the coded information is a member of a series of predetermined coded information and each predetermined coded information is a unique identifier.

Referring to figure 2, illustrating an exemplary embodiment, the system according to the invention is used for example, in a car. The radio studio 8 broadcasts a song of an artist X, which is heard via the loudspeaker 6 by a human ear 7. During the broadcast of the song, the studio 8 also send simultaneously a signal containing the unique identifier which arise to the transmission unit 2. The unique identifier is then emitted by the transmission unit 2 of the car radio 5, for example a blue-tooth transmission unit. Supposing that when the driver hears this song, he wonders what is the name of the artist X. Then he just has to activate a receiving function on his mobile phone 4, by means for activating the receiving unit, and then the receiving function of the mobile phone 4 will activate the receiving unit 3, and the unique identifier will be received by the mobile phone 4.

When coming at home, the driver would like to know the name of the artist X and then, he can activate the decoding means of his mobile phone 4 to receive either the intermediate information which can be an URL address for example or directly the key information, for example, the name of the artist and the title of the song.

When receiving the intermediate information, he can go to the internet and with the URL address, he can go to the website of the radio or to the website of the artist X. When reaching the website of the radio, the URL address can direct him directly to a web page concerning the artist X.

The invention is of course applicable to a wide range of uses, for example, during a TV or radio broadcast, when a book, a movie or a theatre play is discussed and if the public wishes to obtain the key information about the subject matter. According to another example, key information about a music fragment played during a movie is transmitted from a transmission unit in the movie theatre to a user's receiving unit. Instead of key information about a music fragment, the key information can also be about an actor playing in the movie.

For example, the product to be captured by a human sense can be a house for sale. The driver riding in the street where the house for sale can not have some paper to write the phone number of the proprietor or of the brokerage agency and without being distracted from the road while driving his car. Therefore, if the house (or the display "house for sale") comprises a transmission unit 2, the driver has just to activate the receiving function of his mobile phone 4 to get the coded information concerning this house. In this case, the intermediate information can comprise the URL address of the brokerage agency and the code number allowing to retrieve the reference number of this particular house. The key information about the house for sale can therefore be found in the website of the brokerage agency by searching the reference number. In a variant, the intermediate information can directly be the phone number of the brokerage agency and the reference number of the house.

It is also intended according to the invention that, upon receiving the unique identifier or the coded information, for example in a PDA or in a mobile phone 4, the key information can be found by sending a code number, which is the intermediate information, by SMS or by e-mail, to an SMS server or to an e-server. Therefore, the key information will be send to the user's mobile phone 4 or PDA, for example, by the aforementioned server in the form of an SMS or a e-mail.

In Figures 1 and 2, it is preferred that the unique identifier is emitted during the detection of the product by the human sense. The unique identifier can be emitted during the detection of the product in loop either continuously or at predetermined intervals with or without a start signal.

It is also contemplated that the unique identifier can be associated with the product to be captured by a human sense by a human beings in some particular application or that the unique identifier is previously and intimately associated with the product to be captured by a human sense, for example, in a predetermined database.

In an event where products are moved, like exhibition, it is intended that the series of unique identifiers will correspond to a key information which will change with the change of exhibited product. In fact, the unique identifier can be reassigned to another product. Therefore, it can be advantageous to previously program the association of each unique identifier, for example, in a data base or an on line data base, with a key information relating to a particular product to be exhibited and after, to be captured by the human sense. In an alternative, the emitter can be reprogrammed with a computer, a server, or with equivalent means to attribute other unique identifiers to products placed at the same prior place of the previous objects.

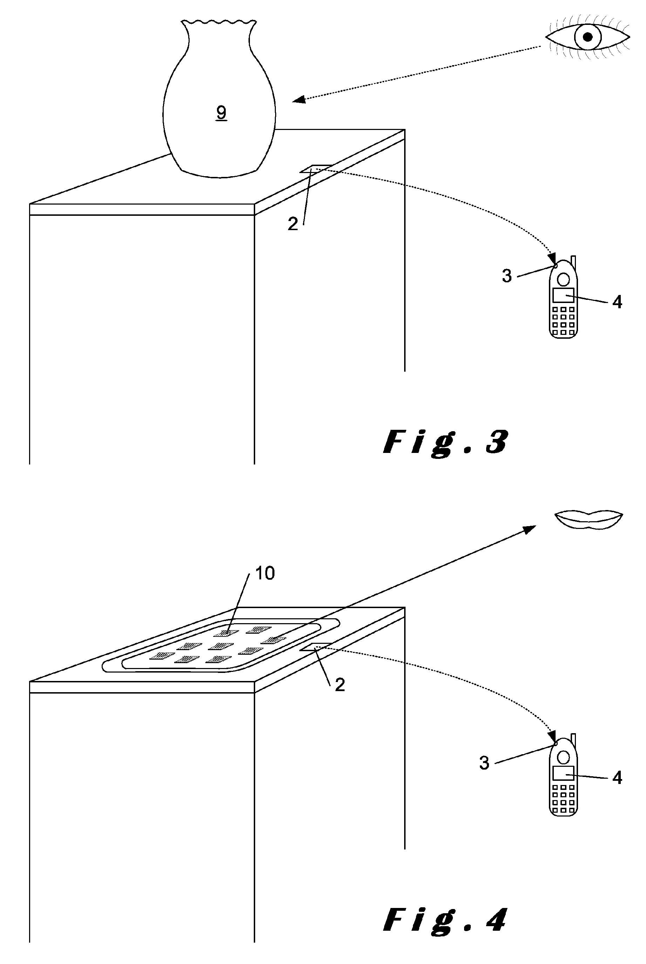

As it can be seen in figure 3, the system comprises, in this variant embodiment, an emitter 2 (transmission unit) to be placed next to a product 9 to be seen in a exhibition. It is also possible, and preferred that every products to be seen has its own emitter. The visitor, when wondering the name of the artist of the origin country of the object or other key information, just has to activate the receiving function of his mobile phone 4 to get the coded information concerning this object. In this case, the intermediate information can comprise the URL address of the artist or of a museum and a code number allowing to retrieve the reference number of this particular object. In this embodiment, it is preferred that the unique identifier is emitted in loop for ensuring that the coded information is emitted when a visitor wishes to receive this latter.

It is also contemplated that a series of transmission unit can be placed next to the object to be seen by visitors. For example, to be sure that everyone can get the key information, for information, commercial, promotion, culture purposes and the like, it can be advantageous that one or several ultrasonic transmission units, IR transmission units, blue tooth transmission units, and even other transmission units having a working frequency range outside of the audible frequency range were placed next to the object to be seen by the visitors.

In this case, when one of the visitors has only an IR receiving unit on its mobile phone and when another one has only a blue-tooth receiving unit on its mobile phone or PDA, they both can receive the coded information to get the key information.

It is also intended that the visitor having a blue-tooth receiving unit on his mobile phone can directly receive the key information as the intermediate information and that the visitor having an IR receiving unit on his mobile phone, can receive an intermediate information to get later the key information.

Figure 4 illustrates a variant embodiment. The object to be captured by a human sense is a food product 10 in taste. When a person tasting this food product 10 wants to know more information like the name of the supplier, the trademark of the food product or the site where he can buy this article, he just has to activate the receiving function of his mobile phone 4 to get the coded information concerning this food product, emitted by the transmission unit 2 placed next to the food product 10. In this non limiting exemple, the intermediate information can comprise a code number to be sent to a server, to receive the key information on its mobile phone 4 by SMS.

Although the preferred embodiments of the invention have been disclosed for illustrative purpose, those skilled in the art will appreciate that various modifications, additions or substitutions are possible, without departing from the scope and spirit of the invention as disclosed in the accompanying claims.

For example, in the case of a museum, the key information can be found, for example in a wall board where an information table is displayed and the intermediate information can be the situation of the key information in the information table of the object in question.

Another example is that the transmission unit can be in the future integrated within a TV, or radio, a car radio and the like.

The transmission unit can also be a magnetic transmission unit or a visual light transmission unit, an electromagnetic transmission unit

It is clear for those skilled in the art that lots of equivalent can be used herein and that all this equivalents are comprised in the scope of the present invention.

## Claims

1. Process for transmitting a key information about a product to be captured by a human sense by using a coded information allowing to retrieve said key information corresponding to said product comprising:
* transmitting from a transmission unit (2) to a receiving unit (3), remote from said transmission unit (2), said coded information corresponding to the key information about said product,
* receiving said coded information by said receiving unit (3) at least upon detection by a human sense of the product, and
* decoding said coded information for providing an intermediate information identifying the key information,
**characterised in that** the coded information is a unique identifier and **in that** the transmitting of said unique identifier is made in a wireless, inaudible way and at least one time during the detection by a human sense of the product.

2. Process according to claim 1, wherein the product is at least one of the following products: an audio product, a visual product, an olfactory product, a touchable product, a taste product.

3. Process according to claim 1 or 2, wherein the intermediate information is the key information and the decoding of the unique identifier provides directly the key information.

4. Process according to anyone of the preceding claims, wherein the transmitting of the unique identifier is done continuously in loop.

5. Process according to any one of the preceding claims wherein the transmitting is chosen among an ultrasonic transmission, an IR transmission, a blue tooth transmission, in a frequency being outside the audible range.

6. System (1) for transmitting a key information about a product to be captured by a human sense by using a coded information allowing to retrieve said key information corresponding to said product for carrying out the process according to anyone of the claims 1 to 5 comprising:
■ at least a transmission unit (2) provided for transmitting the coded information at least during a detection of the product to be captured by the human sense,
■ at least a receiving unit (3) to be placed within an existing device (4) and provided to store the coded information transmitted, remote from said transmission unit (2),
■ decoding means, provided to read and to translate the coded information in an intermediate information, and
**characterised in that** the coded information is a unique identifier and **in that** the transmission unit (2) is a wireless transmission unit provided for an inaudible transmission of the unique identifier.

7. System (1) according to claim 6, further comprising retrieving means provided for allowing the user to retrieve the key information corresponding to the intermediate information upon reading of the intermediate information in said retrieving means

8. System (1) according to claim 6 or 7, wherein the intermediate information is the key information and wherein the retrieving means are the decoding means.

9. System (1) according to anyone of the claims 6 to 8, wherein the transmission unit (2) is an ultrasonic transmission unit, an IR transmission unit or a blue tooth transmission unit, the transmission unit having a working frequency range outside of the audible frequency range.

10. System (1) according to anyone of the claims 6 to 9, wherein said transmission unit (2) is placed next to said product to be captured by a human sense.

11. System (1) according to anyone of the claims 6 to 10, further comprising means for activating said receiving unit (3).
